# EUROPEAN PATENT APPLICATION

(11) **EP 4 421 599 A1**
(43) Date of publication of application: **28.08.2024**
(21) Application number: 22897836.7
(22) Date of filing: 23.11.2022
(51) Int. Cl.: G06F 3/048

(54) **WINDOW MANAGEMENT METHOD AND APPARATUS, AND TERMINAL DEVICE**

(30) Priority: 25.11.2021 CN 202111417271
(71) Applicant: Huawei Technologies Co., Ltd., Shenzhen, Guangdong 518129 (CN)
(72) Inventor: ZHOU, Huan, Shenzhen, Guangdong 518129 (CN); WANG, Xinjian, Shenzhen, Guangdong 518129 (CN); YANG, Jingxiao, Shenzhen, Guangdong 518129 (CN)
(74) Representative: Körber, Martin Hans
(86) International application number: PCT/CN2022/133670
(87) International publication number: WO 2023/093753

(57) **Abstract**

A window management method and apparatus, and a terminal device are provided, and relate to the field of terminal software technologies. The method includes: displaying a window container in a first area of a screen (S1201); displaying a part or all of accommodated windows on the window container in the first area (S1202); and rearranging accommodated windows in the window container according to a specified rule when a quantity of windows in the window container changes and/or a position of a window in the window container changes (S1203). The window container is disposed on the screen, the windows are accommodated, arranged, and displayed on the window container in sequence, to avoid superposition of the windows. In addition, if the quantity of windows in the window container changes and/or the position of the window changes, remaining windows may be rearranged, to ensure that the windows in the window container are orderly arranged, and avoid making it more difficult for a user to subsequently search for a target window.

## Description

This application claims priority to Chinese Patent Application No. 202111417271.3, filed with the China National Intellectual Property Administration on November 25, 2021 and entitled "WINDOW MANAGEMENT METHOD AND APPARATUS, AND TERMINAL DEVICE", which is incorporated herein by reference in its entirety.

### TECHNICAL FIELD

The present invention relates to the field of terminal software technologies, and in particular, to a window management method and apparatus, and a terminal device.

### BACKGROUND

With development of intelligence, functions of a terminal device are more powerful, and a user may install various applications (applications, APPs) on the terminal device, to implement functions such as office work, chat, and music playing on the terminal device. When the user starts a plurality of APPs at the same time, windows corresponding to the plurality of APPs are displayed on a screen of the terminal device. If the terminal device cannot properly manage a display manner of the windows on the screen, the screen is disorderedly displayed, thereby affecting user experience and productivity.

A multi-window management manner of the Microsoft is used as an example. A "taskbar" is displayed below a normal display area of a screen. If a user starts an APP, a window corresponding to the APP is displayed in the normal display area of the screen, and a "zoomed-out window" is also displayed in the taskbar. The user taps the "zoomed-out window" in the taskbar, so that the APP may be displayed in the normal display area of the screen, or the APP may not be displayed in the normal display area of the screen. However, if the user opens a large quantity of windows, a plurality of windows belonging to a same APP are superimposed in the taskbar, and even windows of different APPs are superimposed together. This is inconvenient for the user to search for a target window.

### SUMMARY

To resolve the foregoing problems, embodiments of this application provide a window management method and apparatus, and a terminal device. A window container is disposed on a screen, running windows are accommodated in the window container, and windows in the window container are arranged according to a specified rule. When a window is moved out of the window container, an external window is moved into the window container, or a position of a window in the window container changes, the window container updates arrangement of windows, to ensure that the windows in the window container are orderly arranged, and avoid making it more difficult for a user to subsequently search for a target window.

In view of this, the following technical solutions are used in embodiments of this application.

According to a first aspect, an embodiment of this application provides a window management method, including: displaying a window container in a first area of a screen, where the window container is configured to accommodate and display a running window, and a display area of the screen includes the first area; displaying a part or all of accommodated windows on the window container in the first area; and rearranging accommodated windows in the window container according to a specified rule when a quantity of windows in the window container changes and/or a position of a window in the window container changes.

In this implementation, the window container is disposed on the screen, the windows are accommodated, arranged, and displayed on the window container in sequence, to avoid superposition of the windows. In addition, if the quantity of windows in the window container changes and/or the position of the window changes, remaining windows may be rearranged, to ensure that the windows in the window container are orderly arranged, and avoid making it more difficult for a user to subsequently search for a target window.

In an implementation, the rearranging accommodated windows in the window container according to a specified rule when a quantity of windows in the window container changes and/or a position of a window in the window container changes is specifically: receiving a first operation instruction, where the first operation instruction is an instruction for moving a first window out of the window container, where the windows accommodated in the window container include the first window; and rearranging, according to the first operation instruction, an accommodated window in the window container according to the specified rule.

In this implementation, after the first window is moved out of the window container, another window in the window container is rearranged to fill a position of the removed first window, thereby avoiding wasting space for displaying the window container on the screen and shortening a window chain. This is convenient for the user to subsequently search for the target window.

In an implementation, when the first window is not displayed on the window container in the first area, the method further includes: receiving a second operation instruction, where the second operation instruction is an instruction for changing a window displayed on the window container in the first area; and displaying, on the window container in the first area according to the second operation instruction, a part or all of accommodated windows that are not displayed on the window container in the first area.

In this implementation, if the first window that was accommodated in the window container and that is then moved out of the window container is not displayed on the window container, the window chain displayed on the window container may be slid, and a target window hidden in the background may be displayed on the window container. This is convenient for the user to move the target window out of the window container.

In an implementation, the method further includes: displaying the first window in a second area of the screen, where the display area of the screen includes the second area.

In this implementation, if a window accommodated in the window container is moved to a non-hot area of the screen for display, the window may be normally displayed in the non-hot area of the screen. This implements an interaction function between the window container and the screen, and is easy to manage windows displayed on the screen.

In an implementation, the method further includes: skipping displaying the first window on the window container in the first area.

In this implementation, if the first window is moved out of the window container, the first window may not be displayed on the window container, to prevent simultaneously displaying the first window on the window container and the screen, thereby avoiding wasting a displayable area in the window container.

In an implementation, a size of the first window displayed on the window container in the first area is less than a size of the first window displayed in the second area of the screen.

In an implementation, the rearranging accommodated windows in the window container according to a specified rule includes: rearranging, according to a display sequence on the window container in the first area, another window that is after the first window in a display sequence.

In this implementation, after the first window is moved out, windows after the first window may be rearranged, and the windows after the first window are moved as a whole forward by a distance of one display window. In this way, one window after the first window may fill an original position of the first window, thereby avoiding wasting space for displaying the window container on the screen.

In an implementation, the rearranging accommodated windows in the window container according to a specified rule when a quantity of windows in the window container changes and/or a position of a window in the window container changes is specifically: receiving a third operation instruction, where the first operation instruction is an instruction for moving a second window into the window container; and rearranging, according to the third operation instruction, accommodated windows that are in the window container and that includes the second window according to the specified rule.

In this implementation, if the second window displayed in the non-hot area on the screen is moved into the window container, the user may send the third operation instruction to a processor by sliding the screen, clicking a mouse, or the like, and the processor may move, according to the operation instruction, a window displayed in the non-hot area on the screen into the window container. This implements the interaction function between the window container and the screen, and facilitates management of windows displayed on the screen.

In an implementation, the rearranging accommodated windows that are in the window container and that include the second window according to the specified rule includes: determining information about a position of the second window moved into the window container; determining, based on the information about the position of the second window moved into the window container, two windows that are closest to the second window and that are in the window container; and inserting, according to a display sequence on the window container, the second window between the two windows closest to the second window.

In this implementation, when the user disconnects contact with the screen after moving a window displayed in the non-hot area on the screen into the window container, the processor calculates a position at which the user disconnects contact with the screen, then compares the position with positions of windows displayed on the window container, selects two windows closest to the position at which the user disconnects contact with the screen, and inserts the window displayed in the non-hot area on the screen between the two closest windows. In this way, the window moved into the window container is inserted into the window chain.

In an implementation, the rearranging accommodated windows in the window container according to a specified rule when a quantity of windows in the window container changes and/or a location of a window in the window container changes is specifically: receiving a fourth operation instruction, where the fourth operation instruction is an instruction for changing a position of a third window in the window container, and the windows accommodated in the window container include the third window; determining, according to the fourth operation instruction, information about the position of the third window in the window container; determining, based on the information about the position of the third window in the window container, two windows that are closest to the third window and that are in the window container; and inserting, according to a display sequence on the window container, the third window between the two windows closest to the third window.

In this implementation, if arrangement of the window chain in the window container needs to be changed, the user may send the fourth operation instruction to the processor by sliding the screen, clicking the mouse, or the like, the processor may move, according to the operation instruction, a window in the window container to a position of another window, and the another window is moved backward by a distance of one display window. In this way, a display sequence of the windows in the window container may be changed at any time based on a user requirement, thereby improving user experience and productivity.

In an implementation, the method further includes: receiving a fifth operation instruction, where the fifth operation instruction is an instruction for changing a size of a fourth window displayed on the window container in the first area, and the windows accommodated in the window container include the fourth window; and zooming in or out, according to the fifth operation instruction, the size of the fourth window displayed on the window container in the first area.

In this implementation, if a size of a window displayed on the window container needs to be changed, the user may send the fifth operation instruction to the processor by sliding the screen, clicking the mouse, or the like, and the processor may zoom in or out, according to the operation instruction, the size of the window displayed on the window container. In this way, the size of the window displayed on the window container may be changed based on a user requirement, thereby better meeting a use requirement of the user and improving user experience.

In an implementation, the method further includes: receiving a sixth operation instruction, where the fifth operation instruction is an instruction for changing a size of the window container displayed in the first area of the screen; and zooming in or out, according to the sixth instruction, the size of the window container displayed in the first area of the screen.

In this implementation, if a size of the window container displayed in a hot area needs to be changed, the user may send the sixth operation instruction to the processor by sliding the screen, clicking the mouse, or the like, and the processor may zoom in or out, according to the operation instruction, the size of the window container displayed in the hot area. In this way, a display size of the window container may be changed based on a user requirement, to better meet a use requirement of the user and improve user experience.

In an implementation, the method further includes: receiving a seventh operation instruction, where the seventh operation instruction is an instruction for changing a position of the window container displayed on the screen; and moving, according to the seventh instruction, the position of the window container displayed on the screen.

In this implementation, if a position of the window container displayed in the hot area needs to be changed, the user may send the seventh operation instruction to the processor by sliding the screen, clicking the mouse, or the like, and the processor moves, according to the operation instruction, the position of the window container displayed in the hot area. In this way, a display position of the window container may be changed based on a user requirement, to better meet a use requirement of the user and improve user experience.

According to a second aspect, an embodiment of this application provides a window management apparatus, including a processing unit, configured to: display a window container in a first area of a screen, where the window container is configured to accommodate and display a running window, and a display area of the screen includes the first area; display a part or all of accommodated windows on the window container in the first area; and rearrange accommodated windows in the window container according to a specified rule when a quantity of windows in the window container changes and/or a position of a window in the window container changes.

In an implementation, a transceiver unit is configured to receive a first operation instruction, where the first operation instruction is an instruction for moving a first window out of the window container, and the windows accommodated in the window container include the first window; and the processing unit is specifically configured to rearrange, according to the first operation instruction, an accommodated window in the window container according to the specified rule.

In an implementation, when the first window is not displayed on the window container in the first area, the transceiver unit is further configured to: receive a second operation instruction, where the second operation instruction is an instruction for changing a window displayed on the window container in the first area; and the processing unit is specifically configured to display, on the window container in the first area according to the second operation instruction, a part or all of accommodated windows that are not displayed on the window container in the first area.

In an implementation, the processing unit is further configured to display the first window in a second area of the screen, where the display area of the screen includes the second area.

In an implementation, the processing unit is further configured to skip displaying the first window on the window container in the first area.

In an implementation, a size of the first window displayed on the window container in the first area is less than a size of the first window displayed in the second area of the screen.

In an implementation, the processing unit is specifically configured to rearrange, according to a display sequence on the window container in the first area, another window that is after the first window in a display sequence.

In an implementation, the transceiver unit is further configured to receive a third operation instruction, where the first operation instruction is an instruction for moving a second window into the window container; and the processing unit is specifically configured to rearrange, according to the third operation instruction, accommodated windows that are in the window container and that include the second window according to the specified rule.

In an implementation, the processing unit is specifically configured to: determine information about a position of the second window moved into the window container; determine, based on the information about the position of the second window moved into the window container, two windows that are closest to the second window and that are in the window container; and insert, according to a display sequence on the window container, the second window between the two windows closest to the second window.

In an implementation, the transceiver unit is further configured to receive a fourth operation instruction, where the fourth operation instruction is an instruction for changing a position of a third window in the window container, and the windows accommodated in the window container include the third window; and the processing unit is specifically configured to: determine, according to the fourth operation instruction, information about the position of the third window in the window container; determine, based on the information about the position of the third window in the window container, two windows that are closest to the third window and that are in the window container; and insert, according to a display sequence on the window container, the third window between the two windows closest to the third window.

In an implementation, the transceiver unit is further configured to receive a fifth operation instruction, where the fifth operation instruction is an instruction for changing a size of a fourth window displayed on the window container in the first area, and the windows accommodated in the window container include the fourth window; and the processing unit is further configured to zoom in or out, according to the fifth operation instruction, the size of the fourth window displayed on the window container in the first area.

In an implementation, the transceiver unit is configured to receive a sixth operation instruction, where the fifth operation instruction is an instruction for changing a size of the window container displayed in the first area of the screen; and the processing unit is further configured to zoom in or out, according to the sixth instruction, the size of the window container displayed in the first area of the screen.

In an implementation, the transceiver unit is configured to receive a seventh operation instruction, where the seventh operation instruction is an instruction for changing a position of the window container displayed on the screen; and the processing unit is further configured to move, according to the seventh instruction, the position of the window container displayed on the screen.

According to a third aspect, an embodiment of this application provides a terminal device, including at least one transceiver, at least one memory, and at least one processor that is configured to perform the possible implementations of the first aspect.

According to a fourth aspect, an embodiment of this application further provides a computer-readable storage medium. The computer-readable storage medium stores a computer program, and when the computer program is executed on a computer, the computer is enabled to perform the possible implementations of the first aspect.

According to a fifth aspect, an embodiment of this application provides a computer program product. The computer program product stores instructions, and when the instructions are executed by a computer, the computer is enabled to implement the possible implementations of the first aspect.

### BRIEF DESCRIPTION OF DRAWINGS

The accompanying drawings that need to be used for describing embodiments or the conventional technology are described briefly below.
FIG. 1 is a schematic diagram of a structure of a multi-window interaction system according to an embodiment of this application;
FIG. 2 is a schematic diagram of an application scenario for a multi-window interaction system according to an embodiment of this application;
FIG. 3 is a flowchart of an implementation process of multi-window interaction according to an embodiment of this application;
FIG. 4 is a schematic diagram of an interface on which a "hot area" and a "non-hot area" are displayed on a screen according to an embodiment of this application;
FIG. 5(a) is a schematic diagram of an interface on which a window is moved from a "non-hot area" to a "hot area" on a screen according to an embodiment of this application;
FIG. 5(b) is a schematic diagram of an effect interface on which a window is moved from a "non-hot area" to a "hot area" on a screen according to an embodiment of this application;
FIG. 6(a) is a schematic diagram of an interface on which a window is moved from a "hot area" to a "non-hot area" on a screen according to an embodiment of this application;
FIG. 6(b) is a schematic diagram of an effect interface on which a window is moved from a "hot area" to a "non-hot area" on a screen according to an embodiment of this application;
FIG. 7(a) is a schematic diagram of an effect interface on which a user slides windows in a "hot area" on a screen according to an embodiment of this application;
FIG. 7(b) is a schematic diagram of an interface on which a user performs an operation on a window index table in a "hot area" on a screen to search for a target window according to an embodiment of this application;
FIG. 7(c) is a schematic diagram of an interface on which a user taps a target window that is not completely displayed in a "hot area" on a screen according to an embodiment of this application;
FIG. 7(d) is a schematic diagram of an interface on which a target window that is not completely displayed on a screen is turned into a completely displayed target window according to an embodiment of this application;
FIG. 8(a) is a first schematic diagram of an interface on which a user changes an arrangement sequence of windows in a "hot area" on a screen according to an embodiment of this application;
FIG. 8(b) is a second schematic diagram of an interface on which a user changes an arrangement sequence of windows in a "hot area" on a screen according to an embodiment of this application;
FIG. 8(c) is a third schematic diagram of an interface on which a user changes an arrangement sequence of windows in a "hot area" on a screen according to an embodiment of this application;
FIG. 9(a) is a schematic diagram of an interface on which a user zooms out a size of a window in a "hot area" on a screen according to an embodiment of this application;
FIG. 9(b) is a schematic diagram of an interface on which a user zooms in a size of a window in a "hot area" on a screen according to an embodiment of this application;
FIG. 10(a) is a schematic diagram of an interface on which a user zooms in a size of a "hot area" on a screen according to an embodiment of this application;
FIG. 10(b) is a schematic diagram of an interface on which a user zooms out a size of a "hot area" on a screen according to an embodiment of this application;
FIG. 10(c) is a schematic diagram of an interface on which a user performs a drag operation on a position of a "hot area" on a screen according to an embodiment of this application;
FIG. 11 is a schematic diagram of an architecture of a terminal device according to an embodiment of this application;
FIG. 12 is a schematic flowchart of a window management method according to an embodiment of this application; and
FIG. 13 is a schematic diagram of a structure of a window management apparatus according to an embodiment of this application.

### DESCRIPTION OF EMBODIMENTS

The following describes the technical solutions in embodiments of this application with reference to the accompanying drawings in embodiments of this application.

A multi-window display management technology refers to a technology that is deployed on a multi-window interaction system and that manages all or a part of windows in the system according to specified logic, and has functions such as window display priority management, window layout, window searching, and window switching. A window refers to a part of a display area on a screen of a terminal device. The window knows whether the window is visible or invisible at a given moment, knows how to draw the window, and can respond to an event of a user or an operating system. Generally, the window is presented in a form of an application window, an application view, a content card, an application card, and the like.

When the terminal device starts a plurality of APPs, the multi-window display management technology may manage windows corresponding to the plurality of APPs, so that workspace of the terminal device is effectively used, and user experience is greatly improved. In the conventional technology, only some functions of the multi-window display management technology are used on a terminal device that uses the multi-window display management technology. Specifically, the terminal device focuses on the following functions.

1. Functions of window searching and window switching in the multi-window display management technology. In the conventional technology, the terminal device provides a set of summary information (such as a thumbnail, a window name, and an icon) of opened windows for a user, and the user may switch to a specified window based on the summary information. However, the functions of window searching and window switching only help the user quickly locate a target window, but cannot resolve problems such as multi-window layout disorder and multi-window arrangement disorder.

2. A function of window display priority management in the multi-window display management technology. In the conventional technology, a plurality of windows are placed in one window container, and the user can quickly locate the target window by using the functions of window searching and window switching. Essentially, the window container resolves the problem of multi-window layout disorder by limiting display areas of the windows. However, the problem of multi-window layout disorder still exists in the window container. In addition, a size of the window container limits a quantity of windows that can be simultaneously displayed on the window container. In a multi-window combination working scenario, a plurality of window containers need to be opened to complete a task. This not only increases operation difficulty for the user, but also occupies a normal display size of a screen.

3. A function of window layout in the multi-window display management technology. In the conventional technology, a working area on a screen is divided into a plurality of sub-areas, and a window moved into each sub-area is adjusted, so that a size and a position of each window are consistent with those of the sub-area. In this solution, although the problem of window layout disorder can be well resolved, due to lack of a further management policy, windows moved into each sub-area are in a disordered state. As a result, flexibility of the functions of window searching and window switching is poor.

In the conventional technology, the terminal device that uses the multi-window display management technology has defects. Therefore, this application provides a management method that is mainly used for a multi-window scenario, so that windows can be orderly arranged in a specified area. In addition, in this application, a window searching method and a window switching method are specifically designed, to help a user manage a plurality of windows, and support adjusting, quickly locating, and switching windows, thereby improving user experience and productivity.

In embodiments of this application, a plurality of windows in a window container are sequentially arranged according to a specified arrangement rule, so that the plurality of windows are in a chain arrangement sequence, and are not affected by factors such as a sequence of starting APPs by a user and a use sequence of the user. In this way, arrangement of the windows does not change randomly, to avoid making it more difficult for the user to subsequently search for a target window.

In embodiments of this application, on a basis that original interaction logic of the windows is retained, additional interaction logic may be adaptively provided for the plurality of windows placed in the window container based on a user operation, so that the plurality of windows in the window container have functions of window display and window switching. This improves interaction capabilities of the windows. The window container identifies user operation behavior, and then determines whether to execute the additional interaction logic of the windows.

In embodiments of this application, the window container may limit and adjust, based on a size of the window container, a size of each window placed into the window container, a spacing between the windows, and an arrangement manner of the windows. For example, if a position or a size of the window container changes, a display manner of the windows in the window container may be adjusted synchronously.

In embodiments of this application, when a quantity of windows placed into the window container exceeds a quantity of windows that can be displayed on a screen, a part of windows may be displayed on the screen, and the other part of windows may be hidden in the background. The user may move the windows hidden in the background to the screen through a window switching function, to change a window currently displayed on the screen.

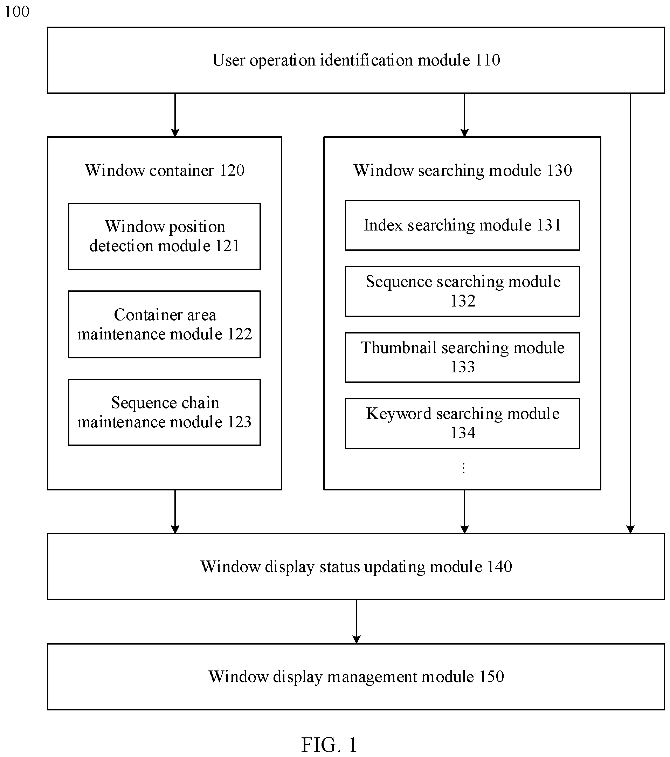

FIG. 1 is a schematic diagram of a structure of a multi-window interaction system according to an embodiment of this application. As shown in FIG. 1, a system 100 includes a user operation identification module 110, a window container 120, a window searching module 130, a window display status updating module 140, and a window display management module 150. The modules are connected to each other, and a specific working mode of each of the modules is specifically as follows:

The user operation identification module 110 may obtain interaction information input by a user, and then determine, with reference to a current status of a window, a module to which the interaction information is currently input. The user operation identification module 110 may be a touch control component, a screen management unit (chip), a central processing unit (central processing unit, CPU), or the like that is disposed at a lower part of a screen. The screen management unit is used as an example. After receiving an operation instruction of the user, the screen management unit may identify, based on data in the operation instruction such as information about a position at which the user taps the screen, a screen tapping manner, and a tapping timestamp and data such as a position at which a current window is displayed on the screen, a display state of the window, and positions of virtual operable sub-interfaces on the window, an operation controlled by the operation instruction input by the user on the window, and the identified operation may be dragging a window or a virtual operable sub-interface, tapping a virtual button in a window, zooming out or zooming in a window or a virtual operable sub-interface, or the like.

When the user operation identification module 110 identifies that the user drags a window, the user operation identification module 110 invokes a window position detection module 121 to monitor a position of the window in real time, and obtains a movement track of the window through analysis based on positions of the window at different moments. The window position detection module 121 may input the movement track of the window to a container area maintenance module 122, so that the window container area maintenance module 122 may determine an operation of moving the window into or out of the window container. In addition, the window position detection module 121 may input the movement track of the window to a sequence chain maintenance module 123, so that the sequence chain maintenance module 123 may determine an operation of changing a sequence of the window. Both moving a window into or out of the window container and a sequence change of a window cause a sequence change of each of windows. Therefore, the sequence chain maintenance module 123 may update a sequence chain of windows in the window container in real time, or when detecting an operation of moving a window into or out of the window container and an operation of changing a sequence of a window, the sequence chain maintenance module 123 updates the sequence chain of the windows in the window container, and finally sends the updated sequence chain of the windows to the window display status updating module 140.

When the user operation identification module 110 identifies that the user performs window searching, the user operation identification module 110 invokes a search algorithm specified in the window searching module 130, performs a corresponding search operation, and finally sends a search result to the window display status updating module 140. Specifically, the window searching module 130 includes an index searching module 131, a sequence searching module 132, a thumbnail searching module 133, and a keyword searching module 134. The index searching module 131 may execute an index searching algorithm, so that the user can locate a target window by using an index. The sequence searching module 132 may execute a sequence searching algorithm, so that the user can locate a target window by sliding a page. The thumbnail searching module 133 may execute a thumbnail searching algorithm, so that the user can locate a target window by using a thumbnail of a window. The keyword searching module 134 may execute a keyword searching algorithm, so that the user can locate a target window based on title information of a window. Other searching algorithms may also be used in this application. This is not limited in this application.

When the user operation identification module 110 identifies that the user directly stretches a size of a window, the user operation identification module 110 directly invokes the window display status updating module 140 to change a display status of the window. The window display status updating module 140 may record information such as a size of each window and a position of each window in the window container, and then send the recorded information to the window display management module 150. The window display management module 150 updates content currently displayed on the window container based on information sent by the window container 120, the window searching module 130, and the window display management module 150.

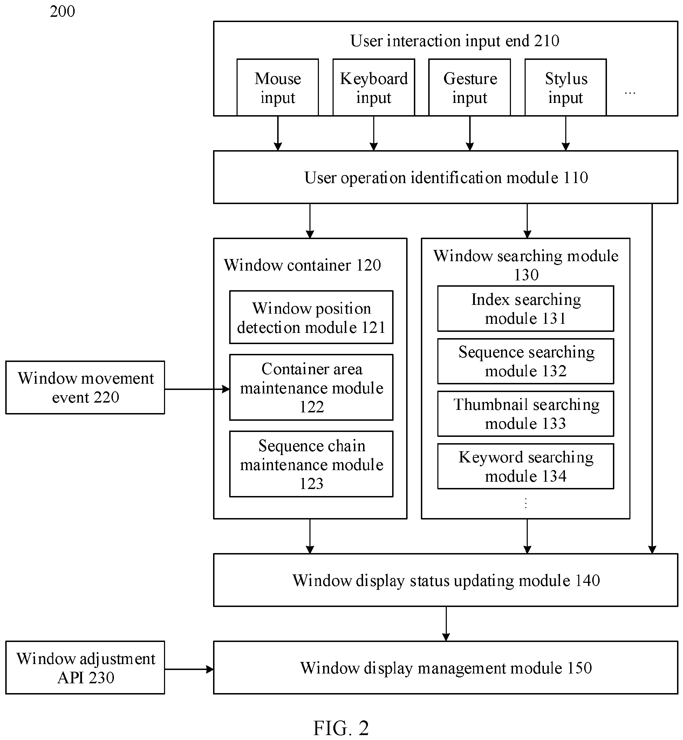

FIG. 2 is a schematic diagram of an application scenario for a multi-window interaction system according to an embodiment of this application. As shown in FIG. 2, a system 200 includes all structures in the system 100 shown in FIG. 1, and further includes a user interaction input end 210, a window movement event 220, and a window adjustment application programming interface (application programming interface, API) 230. For all structures that are in the system 100 shown in FIG. 1 and that are included in the system 200, mutual connection between modules, and specific working manners, refer to FIG. 1 and described solutions corresponding to FIG. 1. Details are not described herein again in this application.

The user interaction input end 210 is an input device used by a user to input an operation instruction, and may be a touch control component, an external mouse, an external keyboard, a camera, or the like disposed at a lower part of a screen. The touch control component is used as an example. When the user performs an operation on a window displayed on the screen, the touch control component may send, to the user operation identification module 110, data such as a position at which the user taps the screen, tapping times, and a tapping timestamp. In this way, the user operation identification module 110 may receive the operation instruction of the user.

The window container 120 may monitor operation behavior of the user on a window. When the window container 120 detects that a window is added into the window container 120, that is, the window container 120 records a time point at which the window is moved into the window container 120, the window container 120 calls back a corresponding interface, to record and add a window event and window information about the window that is newly added to the window container; and the window position detection module 121, the container area maintenance module 122, and the sequence chain maintenance module 123 that are in the window container 120 perform corresponding processing on the registered event and the window information.

In this case, the window container 120 may serve as a message center, and may send messages to other external functional modules. For example, the window container 120 sends a message to the window searching module 130, and the window searching module 130 adds window information to a query library of the window searching module 130 for the user to search for windows. For another example, the window container 120 sends a message to the window display status updating module 140, to notify the window display status updating module 140 that a window is added to the window container 120, a window display status in the window container 120 needs to be updated, windows that need to be displayed are determined, windows that do not need to be displayed are determined, and a quantity of windows that are displayed needs to be determined. Finally, the window container 120 sends a message to the window display management module 150, so that the window display management module 150 may complete displaying of windows in the window container 120 with reference to input messages and information of other modules.

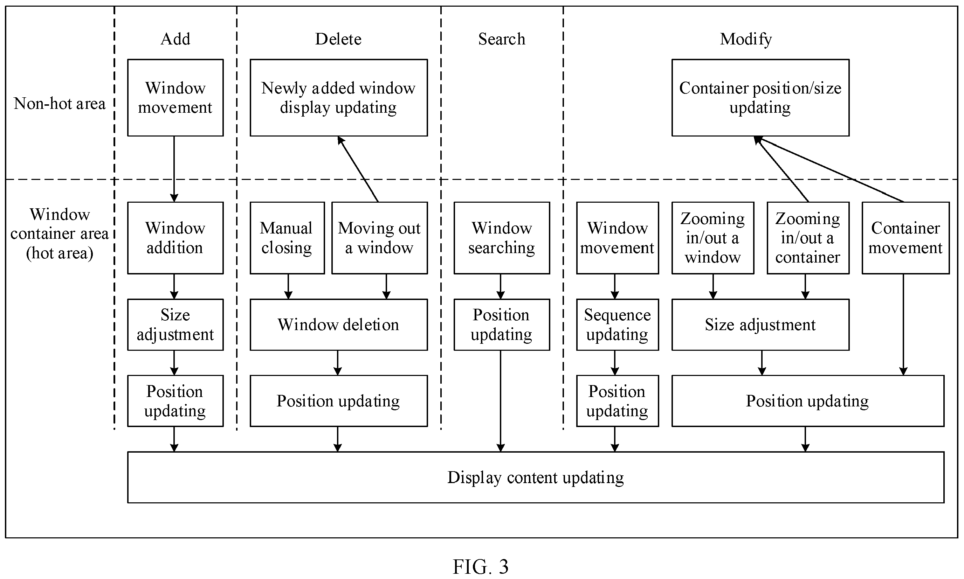

The following describes an implementation process of the technical solutions protected in this application by using diagrams of screen display interfaces shown in FIG. 3 to FIG. 10.

FIG. 3 is a flowchart of an implementation process of multi-window interaction according to an embodiment of this application. As shown in FIG. 3, a specific implementation process of the method may be separately performing "adding", "deleting", "searching", and "modifying" four types of operations on a window.

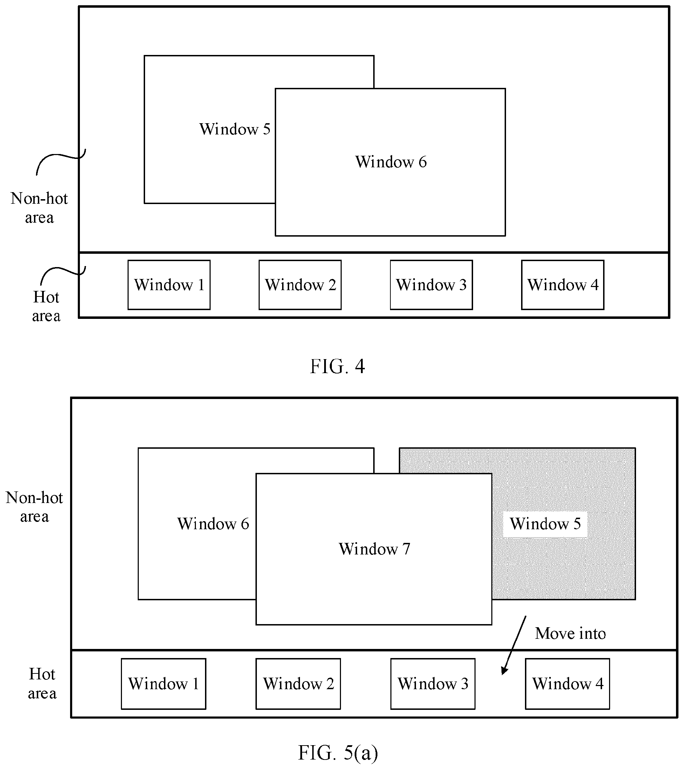

It should be noted in advance that a "hot area" refers to a preset display area range in a display area on a screen of a terminal device, and other display areas are referred to as "non-hot areas" relative to the "hot area". With reference to FIG. 4, in this application, an area that is on a screen and in which a window container is displayed may be defined as the "hot area", that is, the first area mentioned above, and an area in which a window, a desktop, and other content are displayed may be defined as the "non-hot area", that is, the second area mentioned above.

### 1. "Adding" operation of a window.

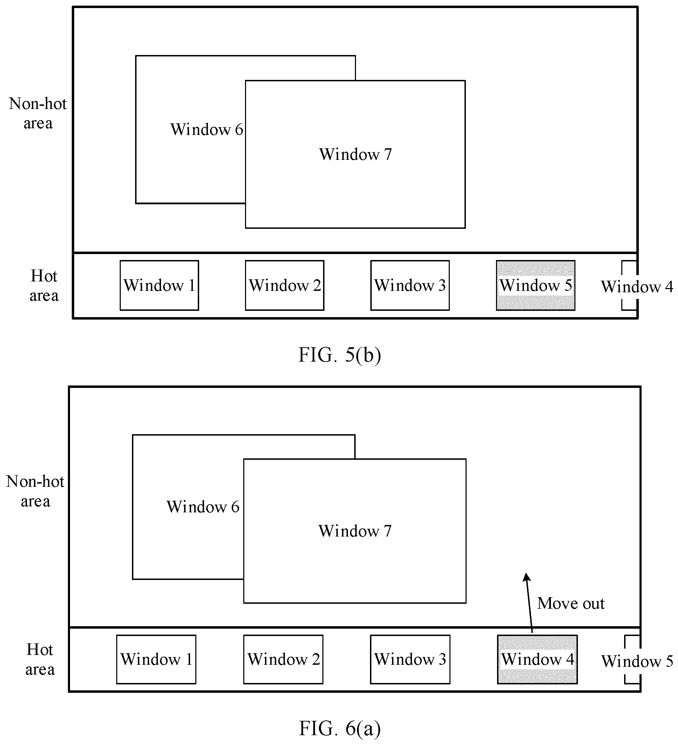

An adding operation of a window is to move a window displayed in the non-hot area into the window container. For example, with reference to FIG. 5(a), a total of seven windows are displayed on the screen of the terminal device, four windows are in the window container and displayed on the window container in the hot area, and three windows are on the desktop and displayed in the non-hot area. When a user does not need a "window 5" to be displayed in the non-hot area, the user may drag the "window 5" from the non-hot area to the window container in the hot area by tapping the screen, dragging the "window 5" with a mouse, or the like. In this way, the "window 5" is moved into the window container, and display effect on the screen is shown in FIG. 5(b) in this case.

When the "window 5" is moved from the non-hot area to the window container in the hot area, a size of the "window 5" needs to be adjusted, so that the "window 5" can be displayed normally after being moved into the window container. For example, if the user needs to move the "window 5", the user may tap the "window 5" in advance, and tap the screen for a period of time that exceeds a set time threshold, to trigger a window moving function. The terminal device may calculate, based on a distance between a position of the "window 5" displayed in the non-hot area and the window container in the hot area, a size of the "window 5" displayed in the non-hot area, and a specified size of a window displayed on the window container, a relationship between a reduction ratio of the size of the "window 5" and the distance between the position of the "window 5" and the window container in the hot area, so that when the user drags the "window 5" to move, the size of the "window 5" varies with the distance between the position of the "window 5" and the window container in the hot area. This can not only avoid visual abruptness caused by sudden reduction of the size of the "window 5" when the "window 5" is moved into the window container in the hot area, but also let the user feel a change of the position of the "window 5" based on a change of the size of the "window 5".

After the "window 5" is moved into the window container, a position of the "window 5" displayed on the window container in the hot area may be after all the windows in the window container, or the "window 5" may be inserted between two windows in the window container. For example, when the "window 5" is dragged from the non-hot area into the window container in the hot area and is in a gap between a "window 3" and a "window 4", the terminal device may move a display position of the "window 4" and display positions of windows after the "window 4" as a whole backward by a distance of one display window. In this way, the "window 5" may be displayed in an original position of the "window 4", the "window 4" is displayed in an original position of a "window 8", and display positions of other windows may be deduced by analogy.

If the "window 5" is inserted between two windows in the window container, the window container may rearrange the inserted "window 5" and all the windows after the "window 5". For example, when the "window 5" is inserted between the "window 3" and the "window 4", the "window 5" replaces the original "window 4" and is sorted between all the windows in the window container, and sequence numbers of all the windows after the "window 4" and the "window 4" are increased by 1 in all the windows in the window container. That is, a sequence number of the "window 5" is 4 in all the windows in the window container, a sequence number of the "window 4" is 5, and sequence numbers of other windows may be deduced by analogy. In this application, all the windows in the window container are rearranged, so that the windows may be sequentially displayed on the window container in the hot area of the screen.

### 2. "Deleting" operation of a window.

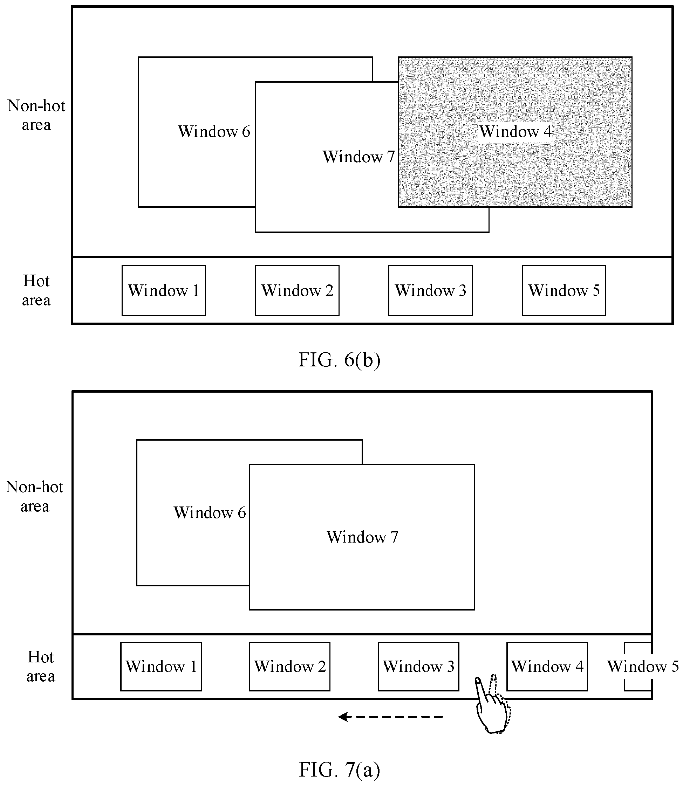

A deleting operation of a window is to move a window displayed on the window container in the hot area to the non-hot area. For example, with reference to FIG. 6(a), a total of seven windows are displayed on the screen of the terminal device, five windows are in the window container and displayed on the window container in the hot area, and two windows are on the desktop and displayed in the non-hot area. When the user needs to display a "window 4" in the non-hot area, the user may drag the "window 4" from the window container in the hot area to the non-hot area by tapping the screen, dragging the "window 4" with a mouse, or the like. In this way, the "window 4" is moved to the non-hot area on the screen for display, and display effect on the screen is shown in FIG. 6(b) in this case.

When the "window 4" is moved from the window container in the hot area to the non-hot area, a size of the "window 4" needs to be adjusted, so that the "window 4" may be displayed normally after being moved to the non-hot area. For example, if the user needs to move the "window 4", the user may tap the "window 4" in advance, and tap the "window 4" for a period of time that exceeds a set time threshold, to trigger a window moving function. The terminal device may calculate, based on a distance between a position of the "window 4" displayed on the window container in the hot area and the non-hot area, a size of the "window 4" displayed on the window container in the hot area, and a specified size of a window displayed in the non-hot area, a relationship between a reduction ratio of the size of the "window 4" and the distance between the position of the "window 4" displayed on the window container and the non-hot area, so that when the user drags the "window 4" to move, the size of the "window 4" varies with a distance between the position of the "window 4" and the window container in the hot area. This can not only avoid visual abruptness caused by sudden reduction of the size of the "window 4" when the "window 4" is moved out of the window container in the hot area, but also let the user feel a change of the position of the "window 4" based on a change of the size of the "window 4".

Before the "window 4" is moved out of the window container, a position of the "window 4" displayed on the window container in the hot area may be after all the windows in the window container, or the "window 4" may be displayed between two windows in the window container. For example, when the "window 4" is between a "window 3" and a "window 5", and after the "window 4" is moved out of the window container in the hot area, the terminal device may move a display position of the "window 5" and display positions of windows after the "window 5" as a whole forward by a distance of one display window. In this way, the "window 5" may be displayed in an original position of the "window 4", and display positions of other windows may be deduced by analogy.

After the "window 4" is moved out of the window container in the hot area, the window container may rearrange the "window 5" and all the windows after the "window 5". For example, when the "window 4" is moved out of the window container, the "window 5" replaces the original "window 4" and is sorted between all the windows in the window container, and sequence numbers of all the windows after the "window 5" are decreased by 1. That is, a sequence number of the "window 5" is 4 between all the windows in the window container, and sequence numbers of other windows may be deduced by analogy. In this application, all the windows in the window container are rearranged, so that the windows may be sequentially displayed on the window container in the hot area.

### 3. "Searching" operation of a window.

A searching operation of a window refers to searching for a target window in a plurality of windows in the window container. For example, with reference to FIG. 7(a), windows in the window container are displayed on the window container in the hot area according to a set sequence. Because there are a large quantity of windows in the window container, only a "window 1", a "window 2", a "window 3", a "window 4", and a "window 5" are displayed on the screen, while other windows can only be hidden in the background due to a size restriction of the window container in the hot area. If the target window that the user wants to search for is not displayed on the screen, the user may tap any position of the window container in the hot area, or the user may tap a window-free position in the hot area, and then slide along a direction of window arrangement. In this way, windows such as the "window 1" and the "window 2" may be slid to one side of the screen and hidden in the background, and windows previously hidden in the background may be brought up from the other side of the screen and displayed on the window container in the hot area on the screen. From a perspective of the user, the windows displayed on the window container in the hot area are all moved to one side of the screen by a distance or distances of one or more display windows.

Optionally, a sliding direction of the windows is not limited to a sliding direction shown in FIG. 7(a), that is, the windows may be slid from the right side of the screen to the left side of the screen (or from the left side of the screen to the right side of the screen). Alternatively, there may be another sliding direction, for example, the windows may be slid from the bottom of the screen to the top of the screen. This is not limited in this application.

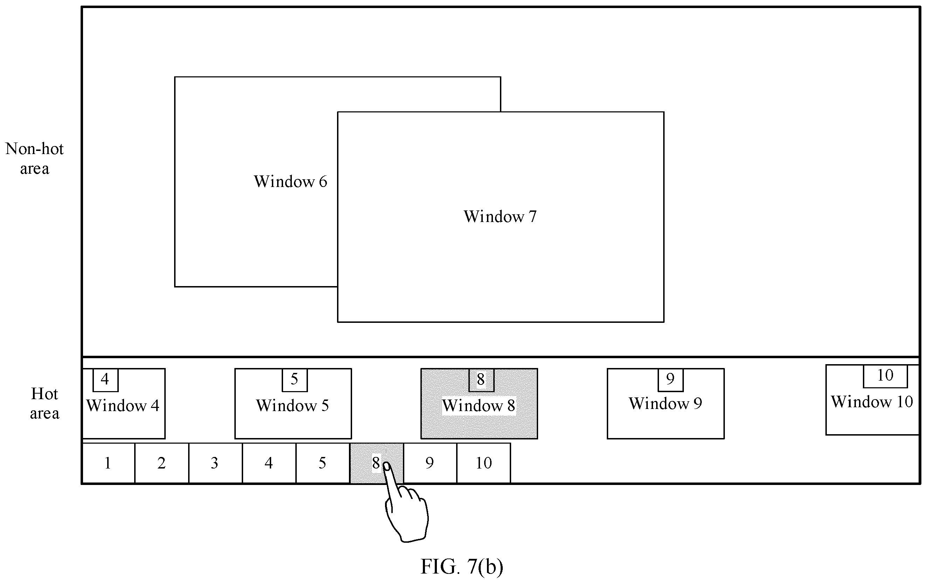

For example, with reference to FIG. 7(b), a window index table may be displayed at a lower left corner or another position of the window container in the hot area. The window index table includes a plurality of virtual buttons, and a display area of each virtual button on the window container in the hot area is smaller than a display area of a window, so that the window index table may be completely displayed on the window container in the hot area, and the window index table occupies a small area. The virtual buttons respectively correspond to the windows in the window container, that is, an arrangement sequence of the virtual buttons is the same as an arrangement sequence of the windows in the window container, and sequence numbers on the virtual buttons one-to-one correspond to sequence numbers on the windows. If the target window, that is, a "window 8", that the user wants to search for is not displayed on the screen, the user may wake up the window index table by triggering a feature, for example, tapping a window-free area in the window container in the hot area for a long time or double-tapping the window container in the hot area, and the window index table is displayed on the window container in the hot area. The user may tap a virtual button numbered "8" in the window index table, and the window container in the hot area automatically displays the "window 8" on the window container in the hot area, so that the target window that was hidden in the background is displayed on the window container in the hot area. This is convenient for the user to search for the target window.

Optionally, when the terminal device determines, based on the virtual button tapped by the user, to display the "window 8" on the window container in the hot area, the terminal device may move windows that are already displayed on the window container in the hot area as a whole forward, and move the "window 8" to a middle position of the window container in the hot area for display. This is convenient for the user to search for the target window, and helps find a position of the target window and windows on the left and right sides of the target window. The windows on the left and right sides of the target window are most likely to be second target windows displayed on the window container in the hot area.

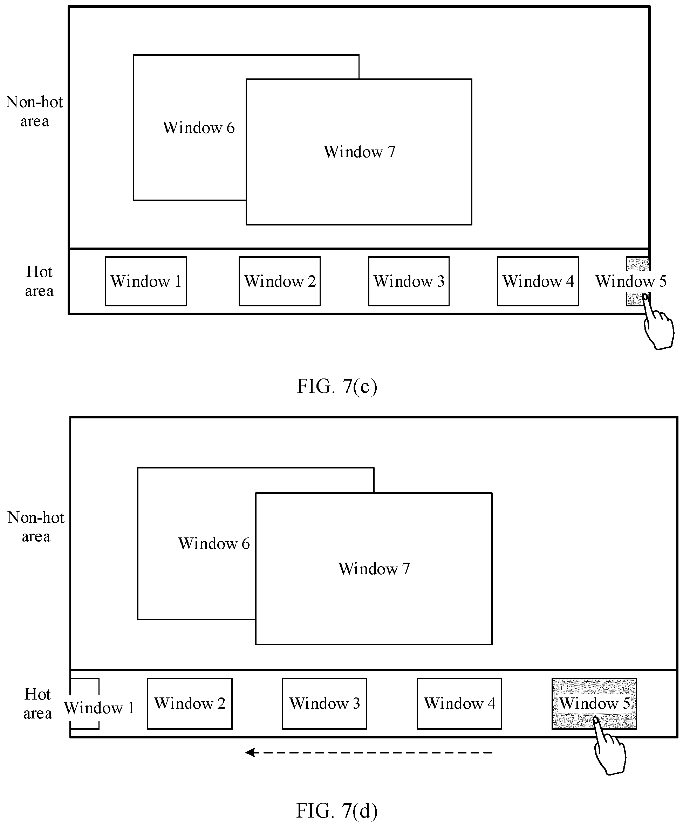

For example, if the target window is completely displayed on the window container in the hot area, the terminal device does not perform any operation. If a part of the target window or the entire target window is not displayed on the window container in the hot area, the terminal device may normally display the target window on the window container in the hot area in a manner corresponding to FIG. 7(a) or FIG. 7(b). Optionally, as shown in FIG. 7(c), the target window is the "window 5", but only a half of the "window 5" is displayed on the window container in the hot area. If the user taps the "window 5", the terminal device may move windows that are already displayed on the window container in the hot area forward, so that an entire interface of the "window 5" is moved to the window container in the hot area. In this way, the "window 5" can be normally displayed on the window container in the hot area, and display effect on the screen is shown in FIG. 7(d) in this case.

### 4. "Modifying" function of a window.

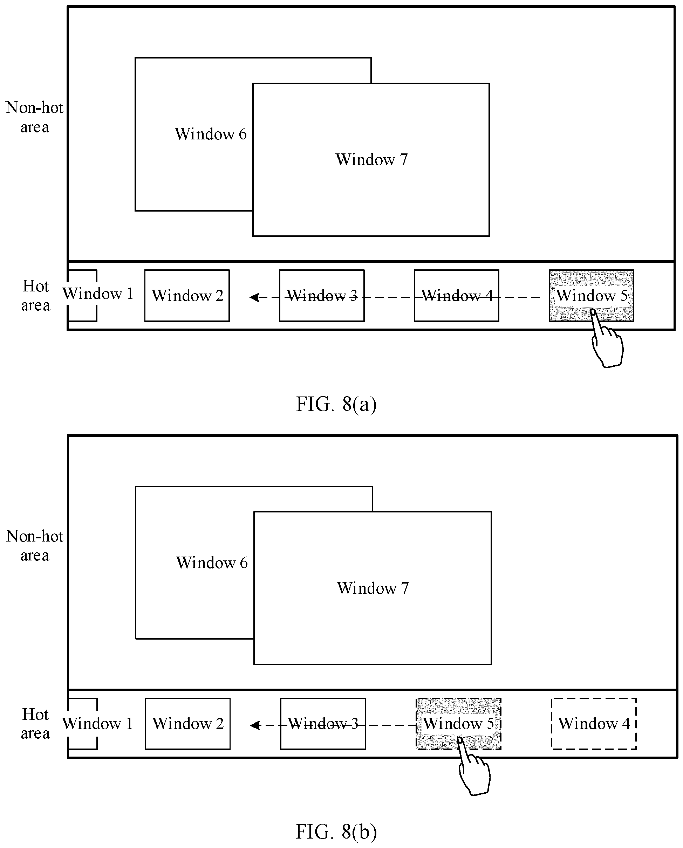

A modifying function of a window may refer to modifying an arrangement sequence of windows in the window container. For example, with reference to FIG. 8(a), if the user needs to move a "window 5" to place the "window 5" between a "window 2" and a "window 3", the user may tap the "window 5", and tap the "window 5" for a period of time that exceeds a set time threshold, to trigger a window moving function, or the user may trigger the window moving function in another manner. The terminal device may enable the "window 5" to move along with an identifier such as a touch point or a mouse control point. As shown in FIG. 8(b), when the user drags the "window 5" to move and pass a "window 4", the "window 4" may be moved backward by a distance of one display window and is in an original position of the "window 5", and the "window 5" may temporarily occupy an original position of the "window 4". Optionally, when the "window 5" temporarily occupies the original position of the "window 4", a color of the "window 5" fades, and an outline of a to-be-placed window is displayed in the original position of the "window 4". If the user taps the "window 5" and does not release the "window 5", the "window 5" is always displayed in a same color as other windows.

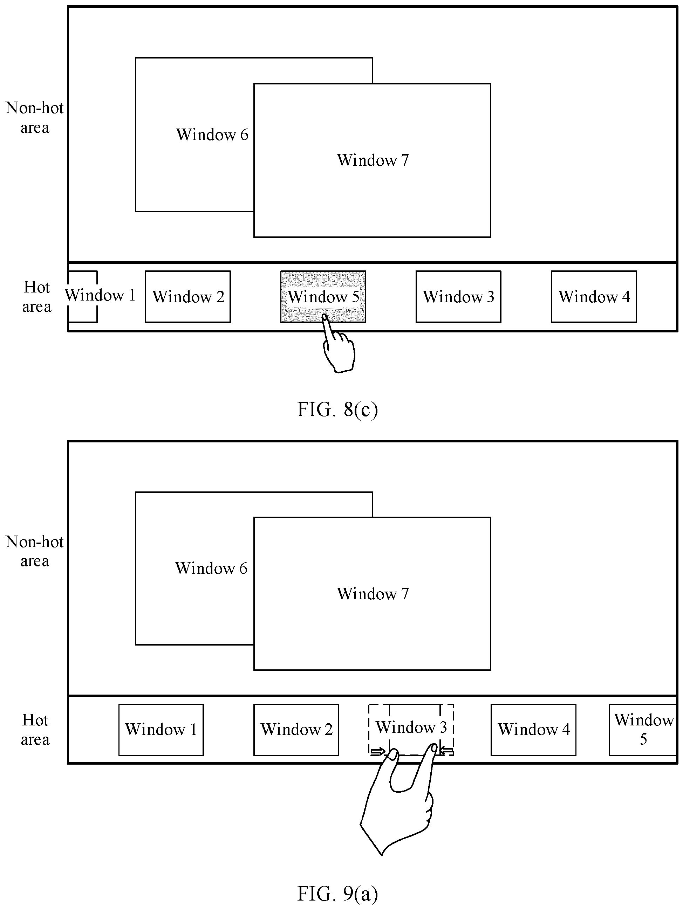

As shown in FIG. 8(c), when the user continues to drag the "window 5" to move and pass the "window 3", the "window 3" may be moved backward by a distance of one display window and is in an original position of the "window 4", and the "window 5" may temporarily occupy an original position of the "window 3". If the user taps the "window 5" and does not release the "window 5", the "window 5" is always in the original position of the "window 3" in a temporary state. If the user releases the "window 5", the "window 5" may be normally displayed in the original position of the "window 3", thereby completing a movement operation and changing an arrangement sequence of the "window 5".

Modifying a window may also refer to modifying a size of a window displayed on the window container in the hot area. For example, with reference to FIG. 9(a), that the user taps the screen with fingers is used as an example. When the user needs to zoom out a window, the user may use two fingers to tap the window (the "window 3" is used as an example), and tap the window for a period of time that exceeds a set time threshold, to trigger a window size modification function. The terminal device may enable the "window 3" to be in a modification mode, then the user may gradually move the two fingers close to each other, and the terminal device may detect a speed at which the two fingers move close to each other in real time, and control, based on a prestored correspondence between the speed at which the two fingers move close to each other and a reduction ratio of a size of the window, to zoom out the size of the "window 3" to a corresponding size and display the "window 3" on the window container in the hot area.

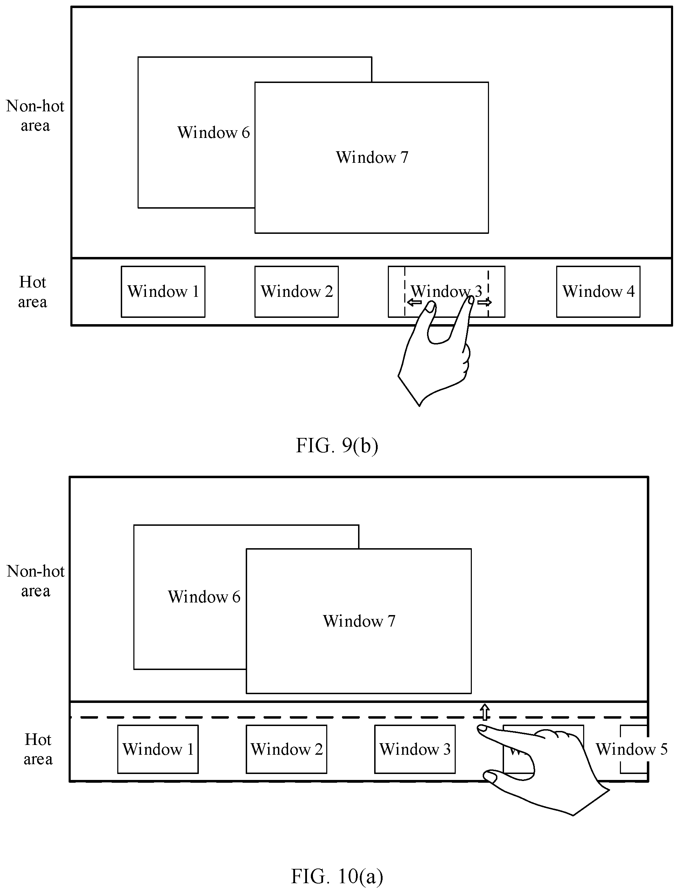

For example, with reference to FIG. 9(b), that the user taps the screen with fingers is used as an example. When the user needs to zoom in a window, the user may use two fingers to tap the window (the "window 3" is used as an example), and tap the window for a period of time that exceeds a set time threshold, to trigger a window size modification function. The terminal device may enable the "window 3" to be in a modification mode, then the user may gradually move the two fingers away from each other, and the terminal device may detect a speed at which the two fingers move away from each other in real time, and control, based on a prestored correspondence between the speed at which the two fingers move away from each other and an enlargement ratio of a size of the window, to zoom in the size of the "window 3" to a corresponding size and display the "window 3" on the window container in the hot area.

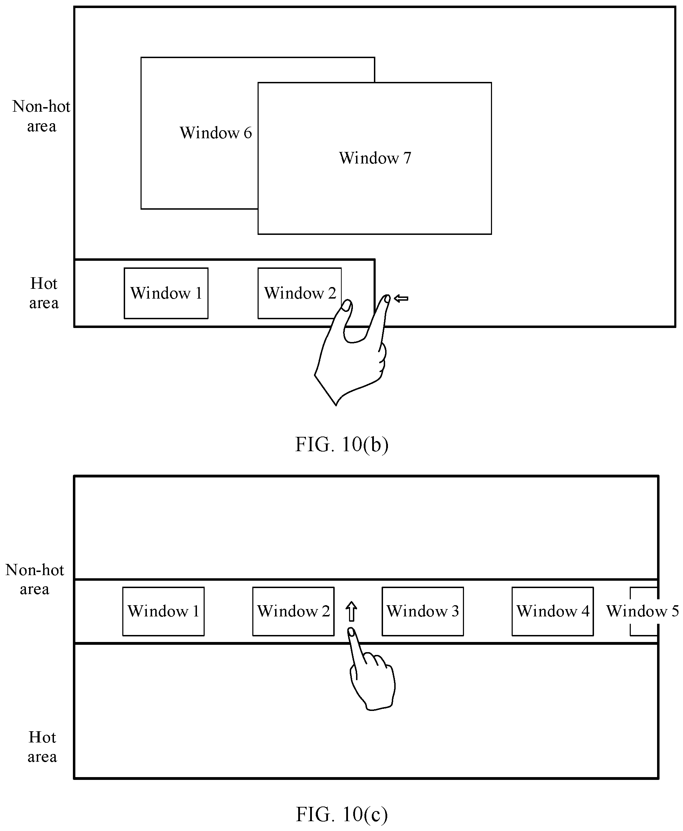

Modifying a window may also refer to modifying a position and a size of the window container displayed in the hot area on the screen. With reference to FIG. 10(a) and FIG. 10(b), that the user taps the screen with fingers is used as an example. When the user needs to adjust the size of the window container in the hot area, the user may tap a window-free area in the window container in the hot area, and tap the area for a period of time that exceeds a set time threshold, to trigger a function of modifying the size of the window container in the hot area. The terminal device may enable the window container in the hot area to be in a modification mode, and then the user may gradually move the two fingers close to or away from each other, to trigger to zoom in or out a display area of the window container in the hot area. Optionally, FIG. 10(a) is used as an example. When one of the two fingers of the user moves upward, the terminal device detects that a distance between the two fingers is increased, and may control, based on a speed at which the two fingers move away from each other, an edge of one side of the window container in the hot area to move in a direction of movement of the finger that moves upward. In this way, the display area of the window container in the hot area is gradually increased along the direction of movement of the finger until the distance between the two fingers does not change, or the display area of the window container in the hot area is not increased after the display area is increased to a specified size.

Optionally, FIG. 10(b) is used as an example. When one of two fingers of the user moves leftward, the terminal device detects that a distance between the two fingers is reduced, and may control, based on a speed at which the two fingers move close to each other, an edge of one side of the window container in the hot area to move in a direction of movement of the finger that moves leftward. In this way, the display area of the window container in the hot area is gradually reduced along the direction of movement of the finger until the distance between the fingers does not change, or the display area of the window container in the hot area is not reduced after the display area is reduced to a specified size.

When the user needs to move the position of the window container in the hot area, the user may tap a window-free area in the window container in the hot area, and tap the area for a period of time that exceeds a set time threshold, to trigger a function of modifying the position of the window container displayed in the hot area. The terminal device may enable the window container in the hot area to be in a movable mode, and then the user may move a finger to a target position, so that the window container in the hot area may be moved to another position on the screen for display. For example, as shown in FIG. 10(c), after a finger of the user triggers the function of modifying the position of the window container displayed in the hot area, when the user taps the window container in the hot area to move upward, the terminal device may detect a position of the finger in real time, and control the window container in the hot area to move along with the position of the finger. In this way, the window container is moved to a middle position of the screen.

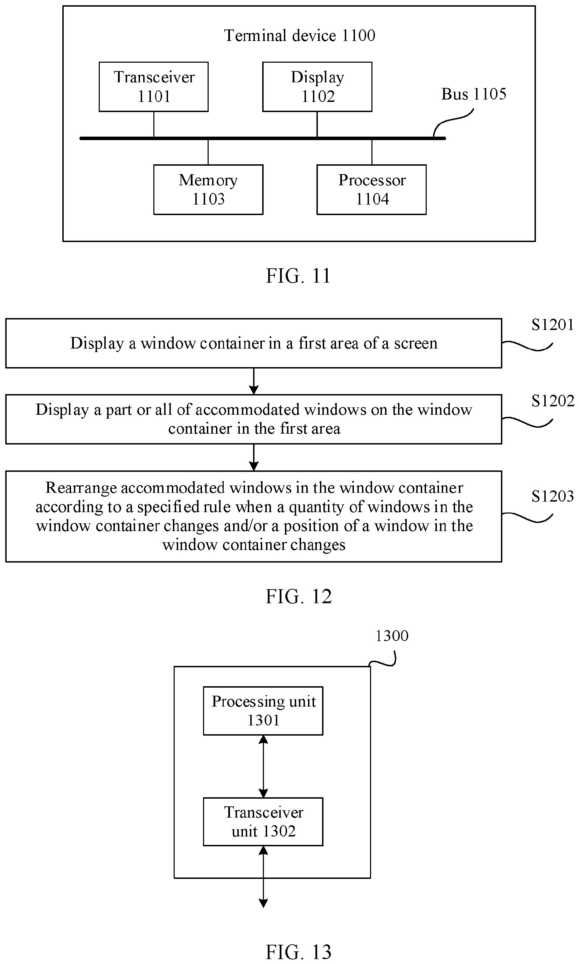

FIG. 11 is a schematic diagram of an architecture of a terminal device according to an embodiment of this application. As shown in FIG. 11, a terminal device 1100 includes a transceiver 1101, a display 1102, a memory 1103, a processor 1104, and a bus 1105. The transceiver 1101, the display 1102, the memory 1103, and the processor 1104 are separately communicatively connected through the bus 1105, to implement mutual communication.

The transceiver 1101 may implement signal input (receiving) and output (sending). For example, the transceiver 1101 may include a transceiver or a radio frequency chip. The transceiver 1101 may further include a communication interface. For example, the terminal device 1100 may receive, through the transceiver 1101, a control instruction sent by an external device such as a mouse, a keyboard, or a touch control component, or may send an execution instruction to another device through the transceiver 1101.

The display 1102 may be a liquid crystal display (liquid crystal display, LCD), an organic light-emitting diode (organic light-emitting diode, OLED) display, or the like. The display 1102 may display interfaces shown in FIG. 4 to FIG. 10 based on processing results of the processor 1104.

The memory 1103 may store a program (or may be instructions or code), and the program may be run by the processor 1104, to enable the processor 1104 to perform the functions shown in FIG. 1 to FIG. 10. Optionally, the memory 1103 may further store data. For example, the processor 1104 may read data stored in the memory 1103, and the data and the program may be stored at a same storage address, or the data and the program may be stored at different storage addresses. In this solution, the processor 1104 and the memory 1103 may be separately disposed, or may be integrated together, for example, integrated on a board or a system on chip (system on chip, SOC).

The processor 1104 may be a general-purpose processor or a dedicated processor. For example, the processor 1104 may include a central processing unit (central processing unit, CPU) and/or a baseband processor. For example, the processor 1104 may control, according to operation instructions, the display 1102 to display different interfaces in FIG. 4 to FIG. 10.

It may be understood that the structure shown in this embodiment of this application does not constitute a specific limitation on the terminal device 1100. In some other embodiments of this application, the terminal device 1100 may include more or fewer components than those shown in the figure, some components may be combined, some components may be split, or different component arrangements may be used. The components shown in the figure may be implemented by hardware, software, or a combination of software and hardware.

FIG. 12 is a schematic flowchart of a window management method according to an embodiment of this application. As shown in FIG. 12, an implementation process may be performed by the processor 1104 in FIG. 11; or the transceiver 1102 in FIG. 11 may establish a communication connection to a device having a processing function such as another terminal device or a cloud server, and the device having the processing function performs the implementation process. A specific implementation process is as follows:
Step S1201: Display a window container in a first area on a screen.

Generally, after a terminal device starts the screen to work normally, the window container is automatically displayed on the screen. Alternatively, the window container is displayed on the screen only when a user triggers a function of displaying the window container. When a plurality of windows are opened on the screen, if a part of the windows are not currently needed but cannot be closed, the part of the windows may be accommodated in the window container, to avoid disorderly display on the screen caused by displaying a large quantity of windows on the screen, thereby further preventing from affecting user experience and productivity.

The windows accommodated in the window container may be arranged according to a specified rule, so that the plurality of windows are arranged in a chain manner, and are not affected by factors such as a sequence of starting APPs by the user and a use sequence of the user. In this way, arrangement of the windows does not change randomly, to avoid making it more difficult for the user to subsequently search for a target window.

Step S1202: Display a part or all of the accommodated windows on the window container in the first area.

Essentially, the window container resolves a problem of multi-window layout disorder by limiting display areas of the windows, and a size of the window container displayed on the screen determines a quantity of windows that are accommodated in the window container and that can be displayed on the screen. If a large quantity of windows are accommodated in the window container, a part of the windows may be displayed on the screen, and the other part of the windows may be hidden in the background. The user may move the windows hidden in the background to the screen through a window switching function, to change a window currently displayed on the screen.

S 1203 : Rearrange accommodated windows in the window container according to a specified rule when a quantity of windows in the window container changes and/or a position of a window in the window container changes.

As shown in FIG. 6(a), because the windows accommodated in the window container are arranged in the chain manner, the user may send an operation instruction (for example, the "first operation instruction" mentioned above) to a processor by sliding the screen, clicking a mouse, or the like. After a "window 4" is moved out of a window chain, an original position of the "window 4" is not occupied. As a result, space for displaying the window container on the screen is wasted. Therefore, in this application, after the "window 4" is moved out, windows after the "window 4" are rearranged, that is, the windows after the "window 4" are moved as a whole forward by a distance of one window, to fill in the position of the "window 4" that has been moved out. This avoids wasting the space for displaying the window container on the screen, shortens the window chain, and is convenient for the user to subsequently search for the target window.

In one embodiment, if the target window (for example, the "first window" mentioned above) that has been accommodated in the window container and that is moved out of the window container is not displayed on the window container, the user may send an operation instruction (for example, the "second operation instruction" mentioned above) to the processor by sliding the screen, clicking the mouse, or the like, and the processor may slide, according to the operation instruction, the window chain displayed on the window container, to display, on the window container, the target window hidden in the background. This is convenient for the user to move the target window out of the window container.

Optionally, a window index table is displayed on the window container, the window index table includes a plurality of virtual buttons, and a display area of each virtual button on the window container is smaller than a display area of a window, so that the entire window index table may be displayed on the window container, and occupies a small size. The virtual buttons respectively correspond to the windows in the window container, that is, an arrangement sequence of the virtual buttons is the same as an arrangement sequence of the windows in the window container, and sequence numbers on the virtual buttons one-to-one correspond to sequence numbers on the windows. If the target window that the user wants to search for is not displayed on the screen, the user may wake up the window index table by triggering a feature, for example, tapping a window-free area in the window container in the hot area for a long time or double-tapping the window container in the hot area, and the window index table is displayed on the window container. The user may tap a virtual button whose number corresponds to a number of the target window and that is in the window index table, and the window container in the hot area automatically displays the target window on the window container in the hot area, so that the target window that was hidden in the background is displayed on the window container in the hot area. This is convenient for the user to search for the target window.

In an embodiment, if a window accommodated in the window container is moved to a non-hot area of the screen for display, the window may be normally displayed in the non-hot area of the screen. This implements an interaction function between the window container and the screen, and is easy to manage windows displayed on the screen. Because a display area of the window container is generally smaller than a display area of the non-hot area on the screen, a size of the target window displayed on the window container is smaller than a size of the target window displayed in the non-hot area on the screen.

Optionally, if the target window is moved out of the window container, the target window may not be displayed on the window container, to prevent simultaneously displaying the target window on the window container and the screen, thereby avoiding wasting a displayable area in the window container. In addition, after the target window is moved out, windows after the target window may be rearranged, and the windows after the target window are moved as a whole forward by a distance of one display window. In this way, one window after the target window may fill an original position of the target window, thereby avoiding wasting space for displaying the window container on the screen.

In an embodiment, if a window (for example, the "second window" mentioned above) displayed in the non-hot area on the screen is moved into the window container, the user may send an operation instruction (for example, the "third operation instruction" mentioned above) to the processor by sliding the screen, clicking the mouse, or the like, and the processor may move, according to the operation instruction, the window displayed in the non-hot area on the screen into the window container. This implements an interaction function between the window container and the screen, and facilitates management of windows displayed on the screen.

For example, that the user taps the screen is used as an example. When the user disconnects contact with the screen after moving the window displayed in the non-hot area on the screen into the window container, the processor calculates a position at which the user disconnects contact with the screen, then compares the position with positions of windows displayed on the window container, selects two windows closest to the position at which the user disconnects contact with the screen, and inserts the window displayed in the non-hot area on the screen between the two closest windows. In this way, the window moved into the window container is inserted into the window chain.

In an embodiment, if a sequence of the window chain in the window container needs to be changed, the user may send an operation instruction (for example, the "fourth operation instruction" mentioned above) to the processor by sliding the screen, clicking the mouse, or the like, the processor may move, according to the operation instruction, a window in the window container to a position of another window, and the another window is moved backward by a distance of one display window. In this way, a display sequence of the windows in the window container may be changed at any time based on a user requirement, thereby improving user experience and productivity.

That the user slides the screen is used as an example. When the user needs to move a window (for example, the "third window" mentioned above) forward, the user may tap the third window, and then drag the third window to move in the window container. After the third window is moved to a predetermined position between two windows, the user may disconnect contact with the screen, and the processor calculates a position at which the user disconnects contact with the screen, compares the position with positions of windows displayed on the window container, selects two windows that are closest to the position at which the user disconnects contact with the screen, and inserts the third window between the two closest windows, to change a sequence of the third window in the window container.

In an embodiment, if a size of a window (for example, the "fourth window" mentioned above) displayed on the window container needs to be modified, the user may send an operation instruction (for example, the "fifth operation instruction" mentioned above) to the processor by sliding the screen, clicking the mouse, or the like, and the processor may zoom in or out, according to the operation instruction, the size of the fourth window displayed on the window container. In this way, a size of the window displayed on the window container may be changed based on a user requirement, thereby better meeting a use requirement of the user and improving user experience.

For example, that the user taps the screen with fingers is used as an example. When the user needs to zoom out a window, the user may tap the fourth window by using two fingers, and tap the fourth window for a period of time that exceeds a set time threshold, to trigger a window size modification function. The processor may enable the fourth window to be in a modification mode, then, the user may gradually move the two fingers close to each other, and the processor may detect a speed at which the two fingers move close to each other in real time, and control, based on a prestored correspondence between the speed at which the fingers move close to each other and a reduction ratio of a size of the window, to zoom out a size of the fourth window to a corresponding size and display the fourth window on the window container.

For example, that the user taps the screen with fingers is used as an example. When the user needs to zoom in a window, the user may tap the fourth window by using two fingers, and tap the fourth window for a period of time that exceeds a set time threshold, to trigger a window size modification function. The processor may enable the fourth window to be in a modification mode, and then, the user may gradually move the two fingers away from each other. The terminal device may detect a speed at which the two fingers move away from each other in real time, and control, based on a prestored correspondence between the speed at which the two fingers move away from each other and an enlargement ratio of a size of the window, to zoom in a size of the fourth window to a corresponding size and display the fourth window on the window container.

In an embodiment, if a size of the window container displayed in the hot area needs to be modified, the user may send an operation instruction (for example, the "sixth operation instruction" mentioned above) to the processor by sliding the screen, clicking the mouse, or the like, and the processor may zoom in or out, according to the operation instruction, the size of the window container displayed on the window container in the hot area. In this way, a display size of the window container may be modified based on a user requirement, to better meet a use requirement of the user and improve user experience.

For example, that the user taps the screen with fingers is used as an example. When the user needs to adjust the size of the window container, the user may tap a window-free area in the window container in the hot area, and tap the area for a period of time that exceeds a set time threshold, to trigger a function of modifying the size of the window container. The processor may enable the window container to be in a modification mode, and then the user may gradually move two fingers close to or away from each other, to trigger to zoom in or out a display area of the window container.

In an embodiment, if a position of the window container displayed in the hot area needs to be modified, the user may send an operation instruction (for example, the "seventh operation instruction" mentioned above) to the processor by sliding the screen, clicking the mouse, or the like, and the processor may move, according to the operation instruction, the position of the window container displayed in the hot area. In this way, a display position of the window container may be modified based on a user requirement, to better meet a use requirement of the user and improve user experience.

For example, when the user needs to move the position of the window container, the user may tap a window-free area in the window container, and tap the area for a period of time that exceeds a set time threshold, to trigger a function of modifying a display position of the window container. The processor may enable the window container in the hot area to be in a movable mode, and then the user may move a finger to a target position, so that the window container may be moved to another position on the screen for display.

FIG. 13 is a schematic diagram of a structure of a window management apparatus according to an embodiment of this application. As shown in FIG. 13, an apparatus 1300 includes a processing unit 1301 and a transceiver unit 1302. A cooperative working process between the units is as follows:

The processing unit 1301 is configured to: display a window container in a first area of a screen, where the window container is configured to accommodate and display a running window, and a display area of the screen includes the first area; display a part or all of accommodated windows on the window container in the first area; and rearrange accommodated windows in the window container according to a specified rule when a quantity of windows in the window container changes and/or a position of a window in the window container changes.

In an implementation, the transceiver unit 1302 is configured to receive a first operation instruction, where the first operation instruction is an instruction for moving a first window out of the window container, and the windows accommodated in the window container include the first window; and the processing unit 1301 is specifically configured to rearrange, according to the first operation instruction, an accommodated window in the window container according to the specified rule.

In an implementation, when the first window is not displayed on the window container in the first area, the transceiver unit 1302 is further configured to: receive a second operation instruction, where the second operation instruction is an instruction for changing a window displayed on the window container in the first area; and the processing unit 1301 is specifically configured to display, on the window container in the first area according to the second operation instruction, a part or all of accommodated windows that are not displayed on the window container in the first area.

In an implementation, the processing unit 1301 is further configured to display the first window in a second area of the screen, where the display area of the screen includes the second area.

In an implementation, the processing unit 1301 is further configured to skip displaying the first window on the window container in the first area.

In an implementation, a size of the first window displayed on the window container in the first area is less than a size of the first window displayed in the second area of the screen.

In an implementation, the processing unit 1301 is specifically configured to rearrange, according to a display sequence on the window container in the first area, another window that is after the first window in a display sequence.

In an implementation, the transceiver unit 1302 is further configured to receive a third operation instruction, where the first operation instruction is an instruction for moving a second window into the window container; and the processing unit 1301 is specifically configured to rearrange, according to the third operation instruction, accommodated windows that are in the window container and that include the second window according to the specified rule.

In an implementation, the processing unit 1301 is specifically configured to: determine information about a position of the second window moved into the window container; determine, based on the information about the position of the second window moved into the window container, two windows that are closest to the second window and that are in the window container; and insert, according to a display sequence on the window container, the second window between the two windows closest to the second window.

In an implementation, the transceiver unit 1302 is further configured to receive a fourth operation instruction, where the fourth operation instruction is an instruction for changing a position of a third window in the window container, and the windows accommodated in the window container include the third window; and the processing unit 1301 is specifically configured to: determine, according to the fourth operation instruction, information about the position of the third window in the window container; determine, based on the information about the position of the third window in the window container, two windows that are closest to the third window and that are in the window container; and insert, according to a display sequence on the window container, the third window between the two windows closest to the third window.

In an implementation, the transceiver unit 1302 is further configured to receive a fifth operation instruction, where the fifth operation instruction is an instruction for changing a size of a fourth window displayed on the window container in the first area, and the windows accommodated in the window container include the fourth window; and the processing unit 1301 is further configured to zoom in or out, according to the fifth operation instruction, the size of the fourth window displayed on the window container in the first area.

In an implementation, the transceiver unit 1302 is configured to receive a sixth operation instruction, where the fifth operation instruction is an instruction for changing a size of the window container displayed in the first area of the screen; and the processing unit 1301 is further configured to zoom in or out, according to the sixth instruction, the size of the window container displayed in the first area of the screen.

In an implementation, the transceiver unit 1302 is configured to receive a seventh operation instruction, where the seventh operation instruction is an instruction for changing a position of the window container displayed on the screen; and the processing unit 1301 is further configured to move, according to the seventh instruction, the position of the window container displayed on the screen.

An embodiment of this application further provides a terminal device. The terminal device includes a processor, and the processor may perform technical solutions in FIG. 1 to FIG. 10 and FIG. 12 and protected technical solutions corresponding to FIG. 1 to FIG. 10 and FIG. 12, so that the terminal device has technical effects of the foregoing protected technical solutions.

An embodiment of this application further provides a computer-readable storage medium. The computer-readable storage medium stores a computer program, and when the computer program is executed in a computer, the computer is enabled to perform any method recorded in FIG. 1 to FIG. 10, FIG. 12, and corresponding descriptions.

An embodiment of this application further provides a computer program product. The computer program product stores instructions, and when the instructions are executed by a computer, the computer is enabled to perform any method recorded in FIG. 1 to FIG. 10, FIG. 12, and corresponding descriptions.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

In addition, aspects or features in embodiments of this application may be implemented as a method, an apparatus or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include, and/or carry instructions and/or data.

In the foregoing embodiment, functions of the window management apparatus 1300 in FIG. 13 may be completely or partially implemented by using software, hardware, firmware, or any combination thereof. When the functions are implemented by using software, all or a part of the functions may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state disk, SSD)), or the like.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, or an access network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application.

## Claims

1. A window management method, comprising:
displaying a window container in a first area of a screen, wherein the window container is configured to accommodate and display a running window, and a display area of the screen comprises the first area;
displaying a part or all of accommodated windows on the window container in the first area; and
rearranging accommodated windows in the window container according to a specified rule when a quantity of windows in the window container changes and/or a position of a window in the window container changes.

2. The method according to claim 1, wherein the rearranging accommodated windows in the window container according to a specified rule when a quantity of windows in the window container changes and/or a position of a window in the window container changes is specifically:
receiving a first operation instruction, wherein the first operation instruction is an instruction for moving a first window out of the window container, and the windows accommodated in the window container comprise the first window; and
rearranging, according to the first operation instruction, an accommodated window in the window container according to the specified rule.

3. The method according to claim 2, wherein when the first window is not displayed on the window container in the first area, the method further comprises:
receiving a second operation instruction, wherein the second operation instruction is an instruction for changing a window displayed on the window container in the first area; and
displaying, on the window container in the first area according to the second operation instruction, a part or all of accommodated windows that are not displayed on the window container in the first area.

4. The method according to claim 2 or 3, wherein the method further comprises:
displaying the first window in a second area of the screen, wherein the display area of the screen comprises the second area.

5. The method according to any one of claims 2 to 4, wherein the method further comprises:
skipping displaying the first window on the window container in the first area.

6. The method according to any one of claims 2 to 5, wherein a size of the first window displayed on the window container in the first area is less than a size of the first window displayed in the second area of the screen.

7. The method according to any one of claims 2 to 6, wherein the rearranging accommodated windows in the window container according to the specified rule comprises:
rearranging, according to a display sequence on the window container in the first area, another window that is after the first window in a display sequence.

8. The method according to claim 1, wherein the rearranging accommodated windows in the window container according to a specified rule when a quantity of windows in the window container changes and/or a position of a window in the window container changes is specifically:
receiving a third operation instruction, wherein the first operation instruction is an instruction for moving a second window into the window container; and
rearranging, according to the third operation instruction, accommodated windows that are in the window container and that comprise the second window according to the specified rule.

9. The method according to claim 8, wherein the rearranging accommodated windows that are in the window container and that comprise the second window according to the specified rule comprises:
determining information about a position of the second window moved into the window container;
determining, based on the information about the position of the second window moved into the window container, two windows that are closest to the second window and that are in the window container; and
inserting, according to a display sequence on the window container, the second window between the two windows closest to the second window.

10. The method according to claim 1, wherein the rearranging accommodated windows in the window container according to a specified rule when a quantity of windows in the window container changes and/or a position of a window in the window container changes is specifically:
receiving a fourth operation instruction, wherein the fourth operation instruction is an instruction for changing a position of a third window in the window container, and the windows accommodated in the window container comprise the third window;
determining, according to the fourth operation instruction, information about the position of the third window in the window container;
determining, based on the information about the position of the third window in the window container, two windows that are closest to the third window and that are in the window container; and
inserting, according to a display sequence on the window container, the third window between the two windows closest to the third window.

11. The method according to any one of claims 1 to 10, wherein the method further comprises:
receiving a fifth operation instruction, wherein the fifth operation instruction is an instruction for changing a size of a fourth window displayed on the window container in the first area, and the windows accommodated in the window container comprise the fourth window; and
zooming in or out, according to the fifth operation instruction, the size of the fourth window displayed on the window container in the first area.

12. The method according to any one of claims 1 to 11, wherein the method further comprises:
receiving a sixth operation instruction, wherein the fifth operation instruction is an instruction for changing a size of the window container displayed in the first area of the screen; and
zooming in or out, according to the sixth instruction, the size of the window container displayed in the first area of the screen.

13. The method according to any one of claims 1 to 12, wherein the method further comprises:
receiving a seventh operation instruction, wherein the seventh operation instruction is an instruction for changing a position of the window container displayed on the screen; and
moving, according to the seventh instruction, the position of the window container displayed on the screen.

14. A window management apparatus, comprising:
a processing unit, configured to: display a window container in a first area of a screen, wherein the window container is configured to accommodate and display a running window, and a display area of the screen comprises the first area;
display a part or all of accommodated windows on the window container in the first area; and
rearrange accommodated windows in the window container according to a specified rule when a quantity of windows in the window container changes and/or a position of a window in the window container changes.

15. The apparatus according to claim 14, wherein
a transceiver unit is configured to receive a first operation instruction, wherein the first operation instruction is an instruction for moving a first window out of the window container, and the windows accommodated in the window container comprise the first window; and
the processing unit is specifically configured to rearrange, according to the first operation instruction, an accommodated window in the window container according to the specified rule.

16. The apparatus according to claim 15, wherein when the first window is not displayed on the window container in the first area,
the transceiver unit is further configured to receive a second operation instruction, wherein the second operation instruction is an instruction for changing a window displayed on the window container in the first area; and
the processing unit is specifically configured to display, on the window container in the first area according to the second operation instruction, a part or all of accommodated windows that are not displayed on the window container in the first area.

17. The apparatus according to claim 15 or 16, wherein
the processing unit is further configured to display the first window in a second area of the screen, wherein the display area of the screen comprises the second area.

18. The apparatus according to any one of claims 15 to 17, wherein
the processing unit is further configured to skip displaying the first window on the window container in the first area.

19. The apparatus according to any one of claims 15 to 18, wherein a size of the first window displayed on the window container in the first area is less than a size of the first window displayed in the second area of the screen.

20. The apparatus according to any one of claims 15 to 19, wherein
the processing unit is specifically configured to rearrange, according to a display sequence on the window container in the first area, another window that is after the first window in a display sequence.

21. The apparatus according to claim 14, wherein
the transceiver unit is further configured to receive a third operation instruction, wherein the first operation instruction is an instruction for moving a second window into the window container; and
the processing unit is specifically configured to rearrange, according to the third operation instruction, accommodated windows that are in the window container and that comprise the second window according to the specified rule.

22. The apparatus according to claim 21, wherein the processing unit is specifically configured to:
determine information about a position of the second window moved into the window container;
determine, based on the information about the position of the second window moved into the window container, two windows that are closest to the second window and that are in the window container; and
insert, according to a display sequence on the window container, the second window between the two windows closest to the second window.

23. The apparatus according to claim 14, wherein
the transceiver unit is further configured to receive a fourth operation instruction, wherein the fourth operation instruction is an instruction for changing a position of a third window in the window container, and the windows accommodated in the window container comprise the third window; and
the processing unit is specifically configured to: determine, according to the fourth operation instruction, information about the position of the third window in the window container;
determine, based on the information about the position of the third window in the window container, two windows that are closest to the third window and that are in the window container; and
insert, according to a display sequence on the window container, the third window between the two windows closest to the third window.

24. The apparatus according to any one of claims 14 to 23, wherein
the transceiver unit is further configured to receive a fifth operation instruction, wherein the fifth operation instruction is an instruction for changing a size of a fourth window displayed on the window container in the first area, and the windows accommodated in the window container comprise the fourth window; and
the processing unit is further configured to zoom in or out, according to the fifth operation instruction, the size of the fourth window displayed on the window container in the first area.

25. The apparatus according to any one of claims 14 to 24, wherein
the transceiver unit is further configured to receive a sixth operation instruction, wherein the fifth operation instruction is an instruction for changing a size of the window container displayed in the first area of the screen; and
the processing unit is further configured to zoom in or out, according to the sixth instruction, the size of the window container displayed in the first area of the screen.

26. The method according to any one of claims 14 to 25, wherein
the transceiver unit receives a seventh operation instruction, wherein the seventh operation instruction is an instruction for changing a position of the window container displayed on the screen; and
the processing unit is further configured to move, according to the seventh instruction, the position of the window container displayed on the screen.

27. A terminal device, comprising:
at least one transceiver,
at least one memory, and
at least one processor, configured to perform the method according to any one of claims 1 to 13.

28. A computer-readable storage medium, wherein the computer-readable storage medium stores a computer program, and when the computer program is executed in a computer, the computer is enabled to perform the method according to any one of claims 1 to 13.

29. A computer program product, wherein the computer program product stores instructions, and when the instructions are executed by a computer, the computer is enabled to perform the method according to any one of claims 1 to 13.
